# EUROPÄISCHE PATENTSCHRIFT

(11) **EP 1 078 186 B1**
(45) Veröffentlichungstag und Bekanntmachung des Hinweises auf die Patenterteilung: **23.07.2003**
(21) Anmeldenummer: 00909270.1
(22) Anmeldetag: 29.02.2000
(51) Int. Cl.: F16K 31/163, F16K 31/165

(54) **SICHERUNGSEINRICHTUNG FÜR GASANWENDUNGSANLAGEN**
SAFETY CONTRIVANCE FOR GAS-USING DEVICE
SYSTEME DE SECURITE POUR DISPOSITIF FONCTIONNANT AU GAZ

(30) Priorität: 09.03.1999 DE 19910215; 07.01.2000 DE 10000447
(43) Veröffentlichungstag der Anmeldung: 28.02.2001
(73) Patentinhaber: Welcker, Friedrich, D-58119 Hagen (DE)
(72) Erfinder: Welcker, Friedrich, D-58119 Hagen (DE)
(74) Vertreter: Beckmann, Jürgen, Dr.
(86) Internationale Anmeldenummer: EP0001692
(87) Internationale Veröffentlichungsnummer: WO00053961

(56) Entgegenhaltungen:
- EP-A- 0 567 787
- WO-A-97/39269
- DE-A- 3 137 116
- FR-A- 2 745 883
- US-A- 4 098 284
- US-A- 4 979 528

## Beschreibung

Die Erfindung bezieht sich auf eine Sicherungseinrichtung für Gasanwendungsanlagen mit einem in die Gasanschlußleitung eingesetzten und auf einen fehlerhaften Gasaustritt im näheren Umgebungsbereich ansprechenden Gasabsperrorgan. Derartige Einrichtungen dienen der Überwachung von örtlichen Rohrleitungsnetzen in bezug auf undichte Verbindungsstellen und auf Undichtigkeiten, hervorgerufen durch mechanische Einwirkungen, Korrosion oder elektrolytische Zerstörung, um diese Schäden unverzüglich beheben zu können.

In Anbetracht dessen liegt der Erfindung die Aufgabe zugrunde, vermittels einer solchen Sicherungseinrichtung bei einem defektbedingten Gasaustritt ein an geeigneter Stelle in die Rohranschlußleitung eingesetztes Gasabsperrorgan automatisch zu betätigen.

Zur Lösung dieser Aufgabe bildet die Erfindung eine Sicherungseinrichtung für Gasanwendungsanlagen nach dem Oberbegriff des Patentanspruchs 1 dahingehend aus, daß an einem in die Gasanschlußleitung eingeschleiften Gasabsperrorgan außenseitig ein pneumatischer Arbeitszylinder angeordnet ist, dessen Betätigungskolben mit dem Verschlußteil des Gasabsperrorgans mechanisch gekoppelt ist. Dieser Betätigungskolben wird durch den Druck einer auf den Arbeitszylinder wirkenden Flüssiggaspatrone gegen die Kraft einer Schließfeder in einer der Offenstellung des Gasabsperrorgans entsprechenden Stellung gehalten. Dabei bewirkt ein dem Arbeitszylinder beigeordnetes Entlüftungsventil, welches durch einen auf fehlerhaften Gasaustritt im Überwachungsbereich ansprechenden Gassensor elektronisch gesteuert wird, eine Entlastung des Betätigungskolbens und infolge dessen den Wechsel des Gasabsperrorgans aus seiner Offenstellung in die Verschlußstellung.

Zweckmäßige Ausgestaltungen und vorteilhafte Weiterbildungen der Erfindung sind aus den nachgeordneten Unteransprüchen 2 bis 11 ersichtlich.

Nach den Merkmalen des Anspruchs 2 stellt sich das in die Anschlußleitung eingesetzte Gasabsperrorgan als Rohrleitungsschalter in Form eines Hahns, einer Klappe, eines Schiebers oder eines Ventils das, dessen jeweiliger Stellvorgang durch ein mechanisches Getriebe der definierten Linearbewegung des Betätigungskolbens innerhalb des pneumatischen Arbeitszylinders angepaßt wird.

Bei dem Entlüftungsventil für den Arbeitszylinder und für die Flüssiggaspatrone handelt es sich nach den Merkmalen des Anspruchs 3 um ein zunächst manuell gegen den im Überwachungssystem vorhandenen Leitungsdruck in seine Sperrstellung verstellbares Ventil, das durch einen nach dem Ruhestromprinzip fungierenden Elektromagneten in dieser Position gehalten wird. Dementsprechend bewirkt dessen Abschaltung durch den im jeweiligen Überwachungsbereich eingesetzten Gassensor mit dem öffnen des Entlüftungsventils die Entlastung des Betätigungskolbens innerhalb des Arbeitszylinders in der Wirkung auf das mit dem Kolben gekoppelte Gasabsperrorgan.

Nach den Merkmalen des Anspruchs 4 ist zu der erstmaligen und danach zu einer wiederholbaren Inbetriebnahme der Sicherungseinrichtung im Anschluß an das durch einen Störfall erforderlich gewordene Auswechseln der entladenen Flüssiggaspatrone eine kombinierte Einschaltmechanik vorgesehen. Dieselbe ist beispielsweise als eine hebelartig und verschwenkbar an dem für eine Aufnahme der verschiedenen Funktionselemente der Sicherungseinrichtung angelegten Gehäuse gelagerte Betätigungshandhabe ausgebildet. Mit dieser lassen sich nacheinander zunächst die Stromversorgung für den aus Gassensor und Haltemagnet bestehenden Überwachungsstromkreis einschalten, danach das von dem erregten Haltemagneten bediente Entlüftungsventil in seine Schließstellung bewegen, und letztlich die den Arbeitszylinder pneumatisch in die entsprechende Offenstellung des eigentlichen Gasabsperrorgans transportierende Flüssiggaspatrone durch abdichtendes Eindrücken in die an deren Halterung vorhandene Anschlußvorkehrung aktivieren. Dabei bewirken etwaige Bedienungsfehler und unerlaubte Manipulationen, technische Defekte einzelner Funktionselemente oder auch Alterungserscheinungen, stets eine Sperrung der gefährdenden Gaszufuhr und gewährleisten somit die unbedingte Eigensicherheit der Gesamteinrichtung.

Zur Auslösung der Sicherungseinrichtung in einem Störfall ist der auf das Vorhandensein von Gas im Überwachungsbereich reagierende Gassensor nach den Merkmalen des Anspruchs 5 mit einem elektrischen Umschaltkontakt ausgerüstet, durch den die Stromversorgung des Haltemagneten für das Entlüftungsventil explosionssicher unterbrochen und an Stelle dessen ein optisches oder akustisches Warnsignal eingeschaltet wird. Auf diese Weise bewirkt das den Arbeitszylinder von dem Druck der Flüssiggaspatrone entlastende Entlüftungsventil unter Federkraft automatisch den sicheren Schließvorgang des Gasabsperrorgans.

Bei dieser Sicherungseinrichtung erfolgt die Betätigung einer Absperrklappe innerhalb der Gasanschlußleitung beispielsgemäß durch einen außen an der betreffenden Rohrleitungsarmatur angebrachten Arbeitszylinder, wozu der Eingriff des benötigten Kopplungsgestänges auf Seiten der Gasanschlußleitung sorgfältig zu realisierende und in Zeitabständen zu wartende Abdichtungsmaßnahmen erforderlich macht. Ebenso aufwendig wirkt sich zum anderen bei der Verwendung eines Kugelhahns als Gasabsperrorgan der apparative Aufwand zur Umsetzung der Linearbewegung des Betätigungskolbens in eine dichtungsbelastete Drehbewegung des hahnseitigen Verschlußteils aus, sowie die Überwindung der an den Dichtflächen gegebenenfalls nach einer längeren Verweilzeit im Betriebszustand auftretenden Abreißkräfte.

Um derartige Abdichtungsprobleme zu vermeiden und den erforderlichen Aufwand zur Betätigung eines Gasabsperrorgans zu verringern, bildet die Erfindung dasselbe einer vorteilhaften Weiterentwicklung gemäß nach Anspruch 6 als ein innerhalb der Rohrleitungsarmatur angeordnetes und für sich selbst schließfederbelastetes Durchgangsventil aus. Des weiteren ist das Ventil über ein verschwenkbares Kopplungsglied vermittels eines von außen her angesetzt in die Armatur eingreifenden Faltenbalges verstellbar gehalten, wobei der Faltenbalg im Betriebszustand durch den Druck der Füllung einer Flüssiggaspatrone und gegen die Rückstellkraft einer eigenen Schraubendruckfeder in der ausgedehnten Stellung gehalten wird.

Auf diese Weise entfallen für das im Gefahrenfall zu betätigende Gasabsperrorgan aufgrund der nunmehr unmittelbar in den gasdichten Armaturenbereich einbezogenen Servomechanismen jegliche Abdichtungsmaßnahmen.

Nach den Merkmalen des Anspruchs 7 verfügt das Durchgangsventil dieser Sicherungseinrichtung über einen koaxial verstellbaren Ventilteller, der durch seine Ventilspindel mittels einer strömungsdurchlässigen Radialverstrebung verstellfähig an der Innenwandung der Rohrleitungsarmatur gehalten wird. An derselben Radialverstrebung stützt sich außerdem die den Ventilteller gegen eine in die Innenwandung der Armatur einbezogene Sitzfläche des Durchgangsventils drückende Schließfeder ab. Demgemäß erfolgt das Öffnen des Ventils gegen die Kraft dieser Schließfeder, was bei Ausfall oder Störung des Betätigungsmoments in jedem Fall und mit Sicherheit eine Sperrung der Gaszufuhr bewirkt.

Hierbei wird der als pneumatisches Stellglied für die Ventilbetätigung fungierende Faltenbalg nach den Merkmalen des Anspruchs 8 als solcher innerhalb eines von außen her dicht in eine seitliche Wandungsöffnung der Rohrleitungsarmatur eingesetzten Rohrstutzens angeordnet. Dazu wird das freistehende Betätigungsende des Faltenbalges nach den Merkmalen des AnSpruchs 9 lose von einer nach innen abgewinkelten Einbördelung eines hülsenförmigen Auflagerelements übergriffen, welches an seinem anderen Ende über eine nach außen abgewinkelte Ausbördelung verfügt, auf der sich die gegen eine innenwandige Schulter des Einsatzstutzens wirkende Rückstellfeder abstützt, um den pneumatisch entlasteten Faltenbalg in seine zusammengepreßte Ausgangsstellung zurückzuführen.

Nach den Merkmalen des Anspruchs 10 ist an der in die Rohrleitungsarmatur hineinreichenden Öffnung des Einsatzstutzens ein von dem Betätigungsende des Faltenbalges beaufschlagbares und zweiarmig ausgebildetes Kopplungsglied verschwenkbar gelagert, um mit seinem längeren Hebelarm über einen konzentrisch innerhalb der Armatur geführten Verbindungsstift auf den verstellbaren Ventilteller des Durchgangsventils zu wirken. Auf diese Weise erfolgt die jeweilige Ventilbetätigung quasi in einem dicht umschlossenen und gaserfüllten Raum.

Außerdem ist nach den Merkmalen des Anspruchs 11 in die kapillare Rohrverbindung zwischen dem als Stellglied für das Durchgangsventil dienenden Faltenbalg und der als Energiespeicher auswechselbar in die Gesamteinrichtung einsetzbaren Flüssiggaspatrone ein definiert auslösbares Magnetventil eingeschleift, mit dem sich die betreffende Wirkverbindung entlüften und demzufolge das Durchgangsventil für die Gaszufuhr sicher sperren läßt. Hierbei erfolgt die Auslösung dieses Entlüftungsventils vorzugsweise explosionssicher auf elektronischem Wege durch einen oder mehrere Gassensoren, die zur Überwachung der im Umfeld vorhandenen Gaskonzentration jeweils in einem potentiellen Gefahrenbereich angeordnet werden.

In der anliegenden Zeichnung ist als Ausführungsbeispiel der Erfindung eine Sicherungseinrichtung für Gasanwendungsanlagen schematisch dargestellt und im folgenden nach Aufbau und Funktion näher beschrieben.

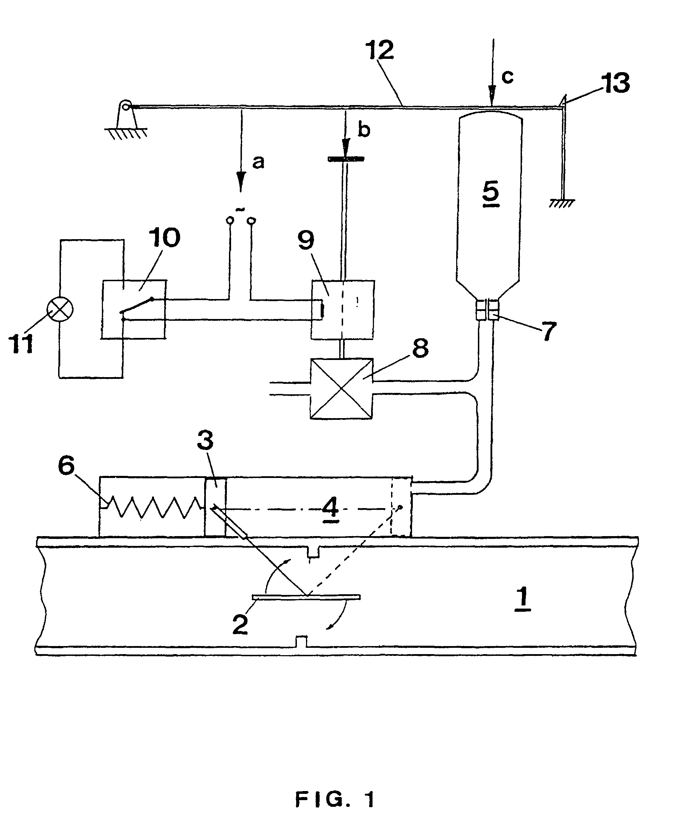

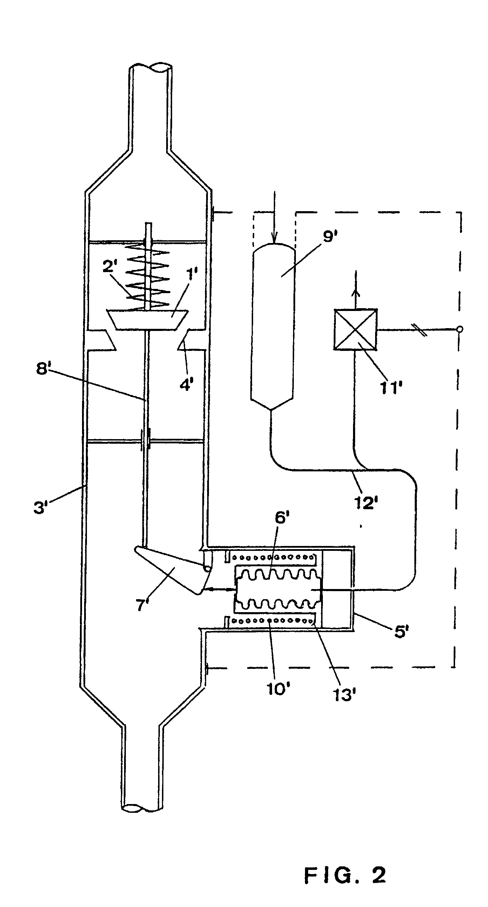

Dabei zeigt Fig. 1 ein Gasabsperrorgan mit außengelegenem Arbeitszylinder, und Fig. 2 ein mitsamt seinem Betätigungsmechanismus in eine Rohrleitungsarmatur einbezogenes Absperrorgan.

Wie aus der Blockdarstellung in Fig. 1 der Zeichnung ersichtlich, ist das in die Anschlußleitung 1 eingeschleifte Gasabsperrorgan 2 hierin als Absperrklappe ausgebildet, deren Verschlußteil über ein nach außen reichendes Gestänge mechanisch mit dem Betätigungskolben 3 eines pneumatischen Arbeitszylinders 4 gekoppelt ist, welcher seinerseits fest oder nachrüstbar im Bereich des Gasabsperrorgans 2 auf der Anschlußleitung 1 angeordnet ist. Dabei wird der Betätigungskolben 3 durch den Druck des in den Arbeitszylinder 4 eingeleiteten Inhalts einer CO₂-Patrone 5 gegen die Kraft der Schließfeder 6 in die mit der Offenstellung des Gasabsperrorgans 2 korrespondierende Position gebracht und bei ungefährdetem Betrieb permanent in derselben gehalten. Hierzu wird die bei Bedarf auswechselbare CO₂-Patrone 5 von Hand in die dafür gahäuseseitig vorgesehene Halterung eingesetzt und im Verlauf einer Inbetriebnahme der Sicherungseinrichtung aktivierend sowie abdichtend auf die vorhandene Anschlußvorkehrung 7 gepreßt.

Zur Auslösung der Sicherungseinrichtung in einem Störfall verfügt der Arbeitszylinder 4 an sich selbst bzw. innerhalb seiner Zufuhrleitung über ein Entlüftungsventil 8, durch welches der vorhandene Druck schlagartig aufgehoben und das Gasabsperrorgan 2 vermittels der Rückstellkraft einer von dem Arbeitszylinder 4 beinhalteten Schließfeder 6 in die Sperrstellung gebracht wird. Zu diesem Zweck ist das Entlüftungsventil 8 mit einem elektrisch betätigten Haltemagneten 9 ausgestattet, von welchem es in erregtem Zustand geschlossen gehalten wird. Wenn dann der an geeigneter Stelle im Überwachungsbereich angebrachte und auf gefährlichen Gasaustritt reagierende Gassensor 10 unter simultaner Einschaltung eines optischen oder akustischen Warnsignals 11 den vorzugsweise aus dem Wechselstromnetz gespeisten Überwachungsstromkreis öffnet, fällt der Haltemagnet 9 ab, öffnet das Entlüftungsventil 8 und bringt damit die Sicherungseinrichtung unter Verschluß der Gasanschlußleitung in den Sperrzustand.

Für die Inbetriebnahme der vorstehend in ihrer Funktion erläuterten Sicherungseinrichtung ist z.B. an einem gemeinsamen Gehäuse für den Arbeitszylinder 4, die CO₂-Patrone 5 und das Entlüftungsventil 8 mit seinem Haltemagneten 9 eine kombinierte Betätigungshandhabe 12 beweglich gelagert, mit der sich nach dem Einsetzen der CO₂-Patrone 5 in die dafür vorgesehene Halterung zunächst a) der beschriebene Überwachungsstromkreis an das rauminstallierte Wechselstromnetz legen und daran anschließend b) der Haltemagnet 9 für das Entlüftungsventil 8 in dessen Sperrstellung verlagern läßt, wonach zuletzt c) die CO₂-Patrone 5 aktivierend auf ihre Anschlußvorkehrung 7 gepreßt und damit die gesamte Sicherungseinrichtung in Betrieb genommen wird. Danach verrastet die gemeinsame Betätigungshandhabe 12 vermittels einer Verriegelung 13 an dem Gehäuse und hält die Sicherungseinrichtung bis zu einem erforderlichen Wechsel einer verbrauchten CO₂-Patrone 5 nach einem gemeldeten sowie sachkundig behobenen Störfall zuverlässig und in sich eigensicher einsatzbereit.

Um dabei außerdem in der Überwachungsphase nicht auf einen eventuellen Ausfall der Netzstromversorgung mit einer Fehlauslösung der Sicherungseinrichtung zu reagieren, wird der beterffende. Überwachungsstromkreis bei Netzausfall selbsttätig z.B. auf einen kleinen NC-Sammler als Hilfsstromquelle umgeschaltet, welcher sich seinerseits nach Wegfall der Störung ebenso selbsttätig aus dem Netz wieder auflädt.

Gemäß der weiteren Blockdarstellung in Fig. 2 der Zeichnung wird der Ventilteller 1' des Durchgangsventils kraft seiner Schließfeder 2' gegen den wandungsseitig von der in die Gasanschlußleitung eingesetzten Rohrleitungsarmatur 3' gebildeten Ventilsitz 4' gedrückt. Zu einer Betätigung des Durchgangsventils 1'/4' ist innerhalb eines von außen her seitlich in die Wandung der Rohrleitungsarmatur 3' eingebrachten Rohrstutzens 5' als pneumatisches Stellglied ein Faltenbalg 6' angeordnet, welcher betätigungsseitig über ein an der nach innen reichenden Stutzenöffnung verschwenkbar gelagertes Kopplungselement 7' auf den im Inneren der Rohrieitungsarmatur 3' konzentrisch gegen den Ventilteller 1' geführten Verbindungsstift 8' wirkt. Dabei wird dieser Faltenbalg 6' durch den Druck der über eine Kapillarleitung 12' in ihn eingeleiteten Füllung einer auswechselbar in die Gesamteinrichtüng einsetzbaren Flüssiggaspatrone 9' und zudem gegen die Kraft einer den Faltenbalg 6' im Wege über ein hülsenförmiges Auflagerelement 13' belastenden Rückstellfeder 10' in die damit korrespondierende Offenstellung des Durchgangsventils 1'/4' gebracht und bei störungsfreiem Betrieb ständig in dieser Position gehalten. Erst bei einem Störfall wird das in die Kapillarleitung 12' zwischen dem Faltenbalg 6' und seiner Flüssiggaspatrone 9' eingeschleifte Entlüftungsventil 11' aktiviert. Dazu wird dessen Elektro(halte-)magnet durch eine von der im Überwachungsbereich installierten Gassensorik bewirkte Unterbrechung der Stromzufuhr stromlos und fällt ab, worauf das Entlüftungsventil 11' öffnet und dadurch die vorhandene Pneumatik insgesamt außer Betrieb setzt. Infolge dessen kehren der Faltenbalg 6' unter Wirkung der Schraubendruckfeder 10' und das mit ihm mechanisch gekoppelte Durchgangsventil 1'/4' unter Wirkung der Schließfeder 2' desselben in die Sperrstellung der Sicherungseinrichtung zurück. In dieser Position verbleiben sie, bis die Störung behoben bzw. der Fehler beseitigt worden ist, das Entlüftungsventil 11' sich wieder geschlossen hat und die entladene Flüssiggaspatrone 9' von Hand gegen eine unverbrauchte ausgewechselt worden ist.

## Patentansprüche

1. Sicherungseinrichtung für Gasanwendungsanlagen mit einem auf fehlerhaften Gasaustritt ansprechenden Absperrorgan (2; 1') in der Anschlußleitung (1; 3'),
**gekennzeichnet durch** einen an dem Gasabsperrorgan (2; 1')
angeordneten Arbeitszylinder (4; 6'), dessen Betätigungskolben (3; 13') mit einem Verschlußteil des Gasabsperrorgans (2; 1') mechanisch gekoppelt ist und **durch** den Druck einer auf den Arbeitszylinder (4; 6') wirkenden Flüssiggaspatrone (5; 9') gegen die Kraft einer Schließfeder (6; 10') in der Offenstellung des Gasabsperrorgans (2; 1') gehalten wird, wobei ein den Betätigungskolben (3; 13') entlastendes Entlüftungsventil (8; 11') an dem Arbeitszylinder (4; 6') elektrisch mittels eines im Überwachungsbereich angeordneten Gassensors (10) gesteuert wird.

2. Sicherungseinrichtung nach Anspruch 1,
**gekennzeichnet durch** ein die lineare Bewegung des
Betätigungskolbens (3) auf seiten des Arbeitszylinders (4) in einen korrespondierenden Stellvorgang für das Gasabsperrorgan (2) als Hahn, Klappe, Schieber oder Ventil umwandelndes Getriebe.

3. Sicherungseinrichtung nach Anspruch 1 oder 2,
**gekennzeichnet durch** ein mechanisch gegen den vorhandenen Betätigungsdruck in seine Sperrstellung transportierbares und in dieser Position elektrisch **durch** einen Elektromagneten (9) gehaltenes Entlüftungsventil (8).

4. Sicherungseinrichtung nach mindestens einem der Ansprüche 1 bis 3, **gekennzeichnet durch** eine kombinierte Einschaltmechanik (12), mittels welcher in zeitlicher Aufeinanderfolge
a) die Stromversorgung für den Überwachungsstromkreis bereitgestellt,
b) das Entlüftungsventil (8) in seine Schließstellung bewegt, und
c) die Flüssiggaspatrone (5) an ihrer Anschlußvorkehrung (7) aktiviert wird.

5. Sicherungseinrichtung nach Anspruch 3 und gegebenenfalls Anspruch 4, **gekennzeichnet durch** einen Gassensor (10) mit einem Umschaltkontakt zur explosionssicheren Abschaltung des Elektromagneten (9) für das Entlüftungsventil (8) und zur simultanen Einschaltung eines optischen oder akustischen Warnsignals (11).

6. Sicherungseinrichtung nach Anspruch 1, 3, 4 und/oder 5,
**gekennzeichnet durch** ein in eine Rohrleitungsarrnatur (3') verschwenkfähig eingreifendes Kopplungselement (7') zwischen einem gegen die Kraft einer Schließfeder (2') verstellbaren Durchgangsventil (1'/4') und einem in seiner Betätigungsrichtung mit einer Rückstellfeder (10') belasteten sowie vermittels der Füllung einer Flüssiggaspatrone (9') ausdehnbaren Faltenbalg (6').

7. Sicherungseinrichtung nach Anspruch 6,
**gekennzeichnet durch** einen koaxial verstellbaren Ventilteller (1') des Durchgangsventils (1'/4'), welcher mit seiner Ventilspindel vermittels einer strömungsdurchlässigen Radialverstrebung an der Innenwandung der Rohrleitungsarmatur (3') gelagert ist und **durch** die sich an der Radialverstrebung abstützende Schließfeder (2') gegen eine armaturenseitig angeordnete Sitzfläche (4') des Durchgangsventils (1'/4') gedrückt wird.

8. Sicherungseinrichtung nach Anspruch 6 oder 7,
**gekennzeichnet durch** einen in einer wandungsseitigen Öffnung der Rohrleitungsarmatur (3') von außen vor dem Durchgangsventil (1'/4') montierbaren Einsatzstutzen (5') zur Aufnahme und Halterung des auf dasselbe wirkenden Faltenbalges (6').

9. Sicherungseinrichtung nach mindestens einem der Ansprüche 6 bis 8, **gekennzeichnet durch** ein hülsenförmiges Auflagerelement (13'), welches mit einer nach innen abgewinkelten Einbördelung das Betätigungsende des Faltenbalgs (6') übergreift, wobei sich demgegenüber auf einer nach außen abgewinkelten Ausbördelung die gegen eine innenwandige Schulter des Einsatzstutzens (5') als Rückstellkraft wirkende Schraubendruckfeder (10') abstützt.

10. Sicherungseinrichtung nach mindestens einem der Ansprüche 6 bis 9, **gekennzeichnet durch** das innenseitig an dem Einsatzstutzen (5') unmittelbar vor dem Betätigungsende des Faltenbalges (6') verschwenkbar gelagerte und zweiarmig ausgebildete Kopplungselement (7') zur Beaufschlagung des Ventiltellers (1') auf Seiten des Durchgangsventils (1'/4') über einen innerhalb der Armatur (3') konzentrisch geführten Verbindungsstift (8').

11. Sicherungseinrichtung nach mindestens einem der Ansprüche 6 bis 10, **gekennzeichnet durch** eine Kapillarrohrverbindung (12') zwischen der in die Einrichtung auswechselbar einzusetzenden Flüssiggaspatrone (9') und dem als Stellglied für das Durchgangsventil (1'/4') fungierenden Faltenbalg (6'), wobei diese Druckleitung (12') **durch** ein elektrisch oder elektronisch auslösbares Magnet(halte-)ventil (11') entlüftbar ist.

## Claims

1. A safety device for systems using gas and having a shut-off element (2, 1') in the connecting line (1, 3') that responds to the incorrect escape of gas, **characterized by** an operating cylinder (4, 6') which is arranged on the gas shut-off element (2, 1') and whose actuating piston (3, 13') is coupled mechanically to a closure part of the gas shut-off element (2, 1') and is held in the open position of the gas shut-off element (2, 1') by the pressure of a liquid-gas cartridge (5, 9') acting on the operating cylinder (4, 6') and against the force of a closing spring (6, 10'), a vent valve (8, 11'), on the operating cylinder (4, 6'), which relieves the pressure on the actuating piston (3, 13') being controlled electrically by means of a gas sensor (10) arranged in the monitoring area.

2. The safety device as claimed in claim 1, **characterized by** a gear mechanism which converts the linear movement of the actuating piston (3) on the side of the operating cylinder (4) into a corresponding actuation for the gas shut-off element (2) as a cock, flap, slide or valve.

3. The safety device as claimed in claim 1 or 2, **characterized by** a vent valve (8) which can be moved mechanically into its blocking position against the prevailing actuating pressure and held electrically in this position by an electromagnet (9).

4. The safety device as claimed in at least one of claims 1 to 3, **characterized by** a combined switching-on mechanism (12) by means of which, in a chronological sequence, a) the power supply for the monitoring circuit is provided, b) the vent valve (8) is moved into its closed position, and c) the liquid-gas cartridge (5) on its connecting safeguard (7) is activated.

5. The safety device as claimed in claim 3 and possibly claim 4, **characterized by** a gas sensor (10) having a changeover contact for the explosion-proof switching-off of the electromagnet (9) for the vent valve (8) and for the simultaneous switching-on of an optical or acoustic warning signal (11).

6. The safety device as claimed in claim 1, 3, 4 and/or 5, **characterized by** a coupling element (7') which is capable of being pivoted and engaging in a pipeline fitting (3') between a through valve (1'/4') that can be adjusted against the force of a closing spring (2') and a bellows (6') that is loaded in its actuating direction by a restoring spring (10') and can be expanded by means of the filling of a liquid-gas cartridge (9').

7. The safety device as claimed in claim 6, **characterized by** a coaxially displaceable valve disk (1') which belongs to the through valve (1'/4') and which is mounted by its valve stem on the inner wall of the pipeline fitting (3') by means of radial struts which permit flow and, by means of the closing spring (2') supported on the radial struts, is pressed against a seating face (4') arranged on the pipeline-fitting side of the through valve (1'/4').

8. The safety device as claimed in claim 6 or 7, **characterized by** an inserted connecting piece (5') which can be fitted from the outside in an opening in the wall of the pipeline fitting (3'), upstream of the through valve (1'/4'), to hold and retain the bellows (6') acting on said through valve.

9. The safety device as claimed in at least one of claims 6 to 8, **characterized by** a sleeve-like support element (13') which, with a peened-over edge angled inward, engages over the actuating end of the bellows (6'), the helical compression spring (10') that acts as a restoring force being supported opposite, on a peened-over edge angled outward, against a shoulder on the inner wall of the inserted connecting piece (5').

10. The safety device as claimed in at least one of claims 6 to 9, **characterized by** the two-armed coupling element (7') which is pivotably mounted on the inside of the inserted connecting piece (5'), immediately in front of the actuating end of the bellows (6'), to act on the valve disk (1') on the side of the through valve (1'/4') via a connecting pin (8') guided concentrically within the fitting (3').

11. The safety device as claimed in at least one of claims 6 to 10, **characterized by** a capillary tube connection (12') between the liquid-gas cartridge (9') to be interchangeably inserted into the device and the bellows (6') functioning as the actuator for the through valve (1'/4'), it being possible for this pressure line (12') to be vented by a magnetic valve (11') that can be triggered electrically or electronically.

## Revendications

1. Système de sécurité pour dispositifs fonctionnant au gaz, avec un organe d'arrêt (2 ; 1') installé dans la conduite d'alimentation en gaz (1 ; 3') et réagissant à une fuite de gaz consécutive à une défaillance,
**caractérisé par** un vérin (4 ; 6') qui est disposé sur l'organe d'arrêt de gaz (2 ; 1') et dont le piston d'actionnement (3 ; 13') est couplé mécaniquement à un élément d'obturation de l'organe d'arrêt de gaz (2 ; 1') et est maintenu dans la position ouverte de l'organe d'arrêt de gaz (2 ; 1') par la pression d'une cartouche de gaz liquide (5 ; 9') agissant sur le vérin (4 ; 6') et contre la force d'un ressort de fermeture (6 ; 10'), une soupape de mise à l'atmosphère (8 ; 11'), prévue sur le vérin (4 ; 6') et libérant le piston d'actionnement (3 ; 13'), étant commandée électriquement au moyen d'un capteur de gaz (10) disposé dans la zone surveillée.

2. Système de sécurité selon la revendication 1,
**caractérisé par** un mécanisme de transmission qui transforme le mouvement linéaire du piston d'actionnement (3) du vérin (4) en un processus de déplacement approprié pour l'organe d'arrêt de gaz (2) réalisé sous forme de robinet, de clapet, de tiroir ou de soupape.

3. Système de sécurité selon la revendication 1 ou 2,
**caractérisé par** une soupape de mise à l'atmosphère (8) qui peut être déplacée mécaniquement dans sa position de blocage à l'encontre de la pression d'actionnement existante, et qui est maintenue électriquement dans cette position par un électro-aimant (9).

4. Système de sécurité selon au moins une des revendications 1 à 3,
**caractérisé par** un mécanisme combiné d'activation (12) au moyen duquel, en succession dans le temps,
a) l'alimentation électrique du circuit de surveillance est mise à disposition,
b) la soupape de mise à l'atmosphère (8) est déplacée dans sa position fermée, et
c) la cartouche de gaz liquide (5) est activée à son moyen de raccordement (7).

5. Système de sécurité selon la revendication 3 et éventuellement la revendication 4,
**caractérisé par** un capteur de gaz (10) pourvu d'un contact de commutation pour désactiver l'électro-aimant (9) de la soupape de mise à l'atmosphère (8) à l'épreuve de l'explosion, et pour activer simultanément un signal avertisseur optique ou acoustique (11).

6. Système de sécurité selon la revendication 1, 3, 4 et/ou 5,
**caractérisé par** un élément d'accouplement (7'), s'engageant avec possibilité de pivotement dans un raccord de tuyauterie (3'), entre une soupape droite (1'/4') pouvant être déplacée contre la force d'un ressort de fermeture (2') et un soufflet (6') sollicité dans sa direction d'actionnement par un ressort de rappel (10') et pouvant être déployé au moyen de la charge d'une cartouche de gaz liquide (9').

7. Système de sécurité selon la revendication 6,
**caractérisé par** un disque de soupape (1') à déplacement coaxial de la soupape droite (1'/4'), qui est monté par sa tige de soupape, par l'intermédiaire d'une entretoise radiale laissant passer le flux, sur la paroi intérieure du raccord de tuyauterie (3'), et qui est pressé contre une face de siège (4'), prévue sur le raccord de tuyauterie, de la soupape droite (1'/4') par le ressort de fermeture (2') qui s'appuie contre l'entretoise radiale.

8. Système de sécurité selon la revendication 6 ou 7,
**caractérisé par** une tubulure rapportée (5'), montée de l'extérieur avant la soupape droite (1'/4') dans une ouverture pratiquée dans la paroi du raccord de tuyauterie (3'), et destinée à recevoir et maintenir le soufflet (6') agissant sur ladite soupape droite.

9. Système de sécurité selon au moins une des revendications 6 à 8,
**caractérisé par** un élément d'appui (13') en forme de manchon, qui recouvre par un bord rabattu vers l'intérieur l'extrémité d'actionnement du soufflet (6'), le ressort de pression à boudin (10'), agissant en tant que ressort de rappel contre un épaulement de la paroi intérieure de la tubulure rapportée (5'), s'appuyant à l'opposé sur un bord rabattu vers l'extérieur.

10. Système de sécurité selon au moins une des revendications 6 à 9,
**caractérisé par** l'élément d'accouplement (7'), réalisé à deux bras et monté à pivotement sur la face intérieure de la tubulure rapportée (5') juste avant l'extrémité d'actionnement du soufflet (6'), élément qui est destiné à solliciter le disque de soupape (1') de la soupape droite (1'/4') par l'intermédiaire d'une tige de liaison (8') guidée concentriquement à l'intérieur du raccord (3').

11. Système de sécurité selon au moins une des revendications 6 à 10,
**caractérisé par** une liaison par tube capillaire (12') entre la cartouche de gaz liquide (9') à insérer avec possibilité de remplacement dans le système, et le soufflet (6') servant d'organe d'actionnement pour la soupape droite (1'/4'), cette conduite sous pression (12') pouvant être mise à l'atmosphère par une soupape magnétique (de maintien) (11') pouvant être déclenchée électriquement ou électroniquement.
